**Europäisches Patentamt**

**European Patent Office**

**Office européen des brevets**

(19)

(11) Publication number : **0 484 262 A2**

(12)

# EUROPEAN PATENT APPLICATION

(21) Application number : **91480155.0**

(22) Date of filing : **10.10.91**

(51) Int. Cl.⁵ : **G06F 15/40**

(30) Priority : **30.10.90 US 605907**

(43) Date of publication of application :
**06.05.92 Bulletin 92/19**

(84) Designated Contracting States :
**DE FR GB IT**

(71) Applicant : **INTERNATIONAL BUSINESS MACHINES CORPORATION**
**Armonk, NY 10504 (US)**

(72) Inventor : **Brown, Jerry Richard**
**782 McKinstry Road**
**Gardiner, New York 12525 (US)**
Inventor : **Lascelles, Martin Christopher**
**3000 15th Street**
**Boulder, Colorado 80304 (US)**
Inventor : **Wong, Michael (NMI)**
**3924 Wedge Court**
**Longmont, Colorado 80503 (US)**

(74) Representative : **Bonin, Jean-Jacques et al**
**Compagnie IBM France Département de**
**Propriété Intellectuelle**
**F-06610 La Gaude (FR)**

(54) **Hypergraphics.**

(57) Storing records of extended graphics information and retrieving such information according to pointers asociated with selected displayed entities. Certain classes of function related to the extended graphics information may be grouped under selective application features.

FIG.2

EP 0 484 262 A2

## Background and Summary of the Invention

This invention relates to CAD or graphic databases and particularly to extensions of CAD or graphics database files.

A database is a collection of records, usually stored on a DASD (direct access storage device) to enable rapid access to the stored data. Databases containing files that are cross references to other files in the database by common indices are called relational databases. The utilization of a database is accomplished through a DBMS (database management system) which normally includes a query language facility, a nonprocedural language usable by unskilled persons to specify addresses to the database. Relational databases enable information to be retrieved according to the relationships represented by storing certain data items in more than one record type. All records related to a subject are thereby accessed through a single input query. This provides a powerful tool for retrieving related information.

CAD (computer aided design) or graphic databases, on the other hand, are hierarchical types which limits relationship among record types. A hierarchical database is constrained such that each record can be related in only one way as a subordinate and such that only one relationship can exist between any two records.

A network database, a database with weighted edges, avoids some of the limitations of a hierarchical database at the expense of more complicated DBMS. A network database is a directed graph having vertices that represent subprojects and directed edges representing prerequisites. A network database storing a directed graph in which the vertices represent tasks or activities and the edges represent relations between tasks is an "activity on vertex" (AOV) network. Connectivity information is especially suited to AOV networks but are not efficient for graphic information in general.

To keep the databases for CAD or graphic drawings as compact as possible for reasons of fast processing times and yet provide as much corollary data as possible for access by the CAD system, it is necessary to store corollary data separately from the drawing database or records that are used to display the image and still be readily accessible. Corollary data may take the form of overlay drawings that show additional details of sections of the main drawing, text files that can be added to the drawing, notes about particular parts of the drawing, expanded drawings showing features not normally needed or put on the drawing.

Usually attribute records are supplied with CAD drawing files for ancillary purposes such as parts lists and the like associated with a particular drawing. The corollary data could be stored as attributes but this has several disadvantages. The attribute records are accessible by the user and may contain information or data that is meaningless to the user. It also would permit the user to modify the attribute record without a knowledge of the details of its workings. Putting the corollary data in extension records accessible only to the programmer makes them accessible to but not modifiable by the user.

The prior art teaches various methods for linking lists or accessing records or files from other records or files as well as linking databases.

U.S. Patent 4,025,901 discloses hardware to perform database operations using specialized hardware supported instructions to assist set operations applied to database processing. The purpose is to decrease the database operations execution time. It specifically relates to an instruction that loads a database address of a member record's owner into a register.

U.S. Patent 4,774,655 discloses access to several databases, one at a time. A user selects from a menu an area of interest and the appropriate database is automatically accessed. Queries entered by the user are translated into a format applicable to the accessed database.

U.S. Patent 4,835,730 shows a robotic control using three separate, interrelated databases, each directed to a class of specific tasks, viz., the tasks to be performed, the details of how to perform each task, and locations of workcells and assembly objects. One database can access another, e.g., the second can access the third to determine where a part that is to be added to an assembly is stored.

U.S. Patent 4,870,576 describes real estate search and location using a telecommunication link. A remote terminal can display a map from which a user selects an area of interest. A query can be made using parameters such as price, size, and the like. The queries are queued for later processing. The response then supplies of property identification numbers corresponding to properties in the desired area having the desired attributes.

U.S. Patent 4,862,345 discloses a special file (Standard Delineated File) for linking a database management system to a program that generates drawings. The information for the SDF is information from an instrumentation loop drawing as default information in addition to that supplied by the user.

This invention is the use, in a CAD or graphics system, of extension record pointers vice attribute records to access files related to the display file via special functions.

In accordance with the invention, a graphics system that displays images from stored files of displayable entities includes selectable application programs that permit certain functions associated with the displayed entities to be selected. After selecting a function, a displayed entity may be selected. The selected displayed entity is associated with its stored file which includes a pointer that permits access to extension records related to the displayed entity and the selected function.

Brief Description of the Drawing

The invention is described in detail by referring to the various figures which illustrate specific embodiments of the invention, and wherein like numerals refer to like elements.

FIG. 1 is a block process chart for showing a sequence of events in practicing the invention.

FIG. 2 is a flowchart of a sequence of operations according to the preferred embodiment of the invention.

FIG. 3 is a sample graphics image of a drawing depicting part of a block diagram of a control system for a gasoline engine fuel pump.

FIG. 4 is an enhanced sample graphics image of the control system of FIG. 3 showing the details of certain parts.

Description of the Preferred Embodiment

In the following description, references are made to the flowcharts depicting the sequence of operations performed by the program. The symbols used therein are standard flowchart symbols accepted by the American National Standards Institute and the International Standards Organization. In the explanation, an operation may be described as being performed by a particular block in the flowchart. This is to be interpreted as meaning that the operations referred to are performed by programming and executing a sequence of instructions that produces the result said to be performed by the described block. The actual instructions used depend on the particular hardware used to implement the invention. Different processors have different instruction sets but the person of ordinary skill in the art is familiar with the instruction set with which he works and can implement the operations set forth in the blocks of the flowchart.

In the embodiment of the invention being described, a separate program module (CADTECH) is used to display a menu from which the type of extended record can be selected. After selecting a particular function, the user selects a shape to which to apply the function. The shape is associated with a pattern and the extension pointers are part of the pattern record. The extension records are accessed via identification, extension number, and type as selected from the menu. The drawing or text in the extension record can then be displayed or alternatively added to a return list that is displayed for selection by the user.

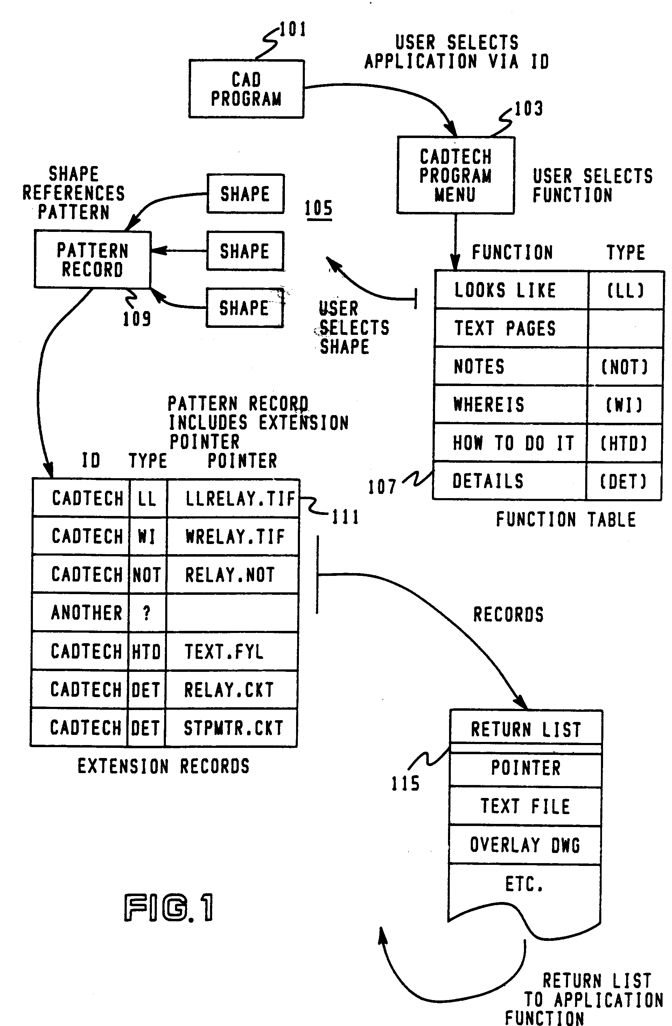

In FIG. 1, a CAD program 101 provides the user with the ability to select an application using an identification number. A separate program module 103, named CADTECH, then displays, when selected as an application, a function table 107 from which the user can choose a function of interest.

The user selects the desired function from the displayed function table 107. Examples of the functions shown include LOOKS LIKE which can cause a picture of the selected shape, perhaps digitized from a photograph, to be displayed. The WHEREIS function displays a cursor, arrow, highlight, blinking or some other contrasting method that shows the location of a device corresponding to the selected shape. DETAILS can be used to fill in the details of a selected block in a block diagram.

After selecting the desired function, the user then selects a shape 105 of interest. The extension records 111 pointed to by the shape record are identified by application (CADTECH) and type of function in accord with the selection from the function table 107.

The pointer of the selected extension record is copied into a return list 115 that is returned to the application function (CADTECH) when completed.

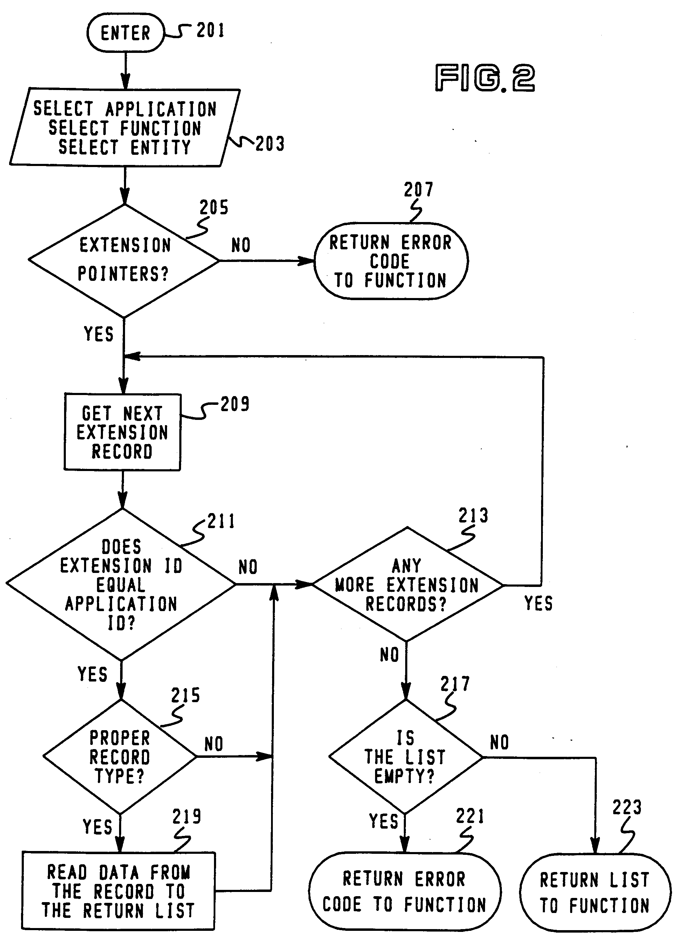

FIG 2 is a flowchart of the process of selecting extension records. The program is entered at a terminal block 201. In an input/output block 203, the user selects the application, the function, and the entity (shape). If no extension pointers are associated with the selected shape, a decision block 205 causes an error code to be returned to the application as shown by a terminal block 207. The action resulting from the error return can be one of several choices well known in the art and need not be explained in detail for an understanding of the invention.

If no extension pointers are associated with the selected shape, an action resulting from the error return can include looking at the extension pointers of the pattern with which the shape is associated. The pattern's extension pointers are examined in the same way as those for a shape and, similarly, if the pattern has no associated extension records, the extension records of the next higher entity in the hierarchy are examined. Thus, the extension records of higher levels are inherited by those below it in the hierarchy.

It is possible to extend an extension record search downwards through the hierarchy, building a list of extension record data associated with lower level entities.

If extensions are associated with the selected entity, then a process block 209 fetches an extension record. A decision block 211 compares the identification of the extension record with the identification of the application. If not the same, then a decision block 213 repeats the process beginning at the process block 209 if there are more extension records. If the identification of the extension record equals that of the application, then a decision block 215 determines whether the record is of the proper type. If it is, then a process block 219 copies the record into the return list and continues with the check of more extension records in the decision block 213. The latter path is also the path taken if the extension is not of the proper type.

When there are no more extension records as determined in the decision block 213, a check is made by a decision block 217 whether the return list is empty. If so, an error code is returned to the application in the terminal block 221. Otherwise, the return list is returned to the application by a terminal block 223.

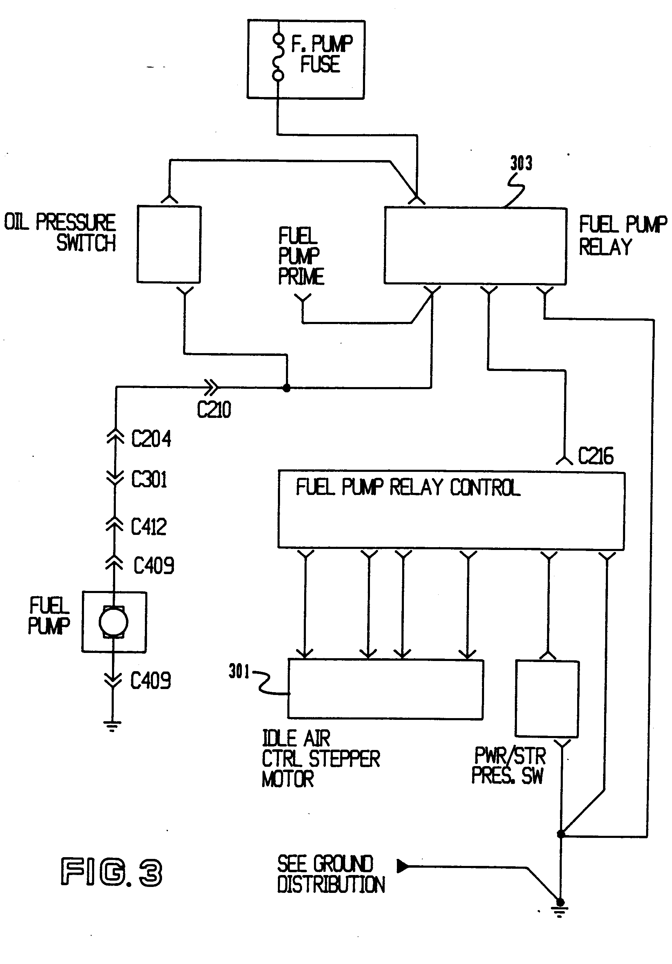

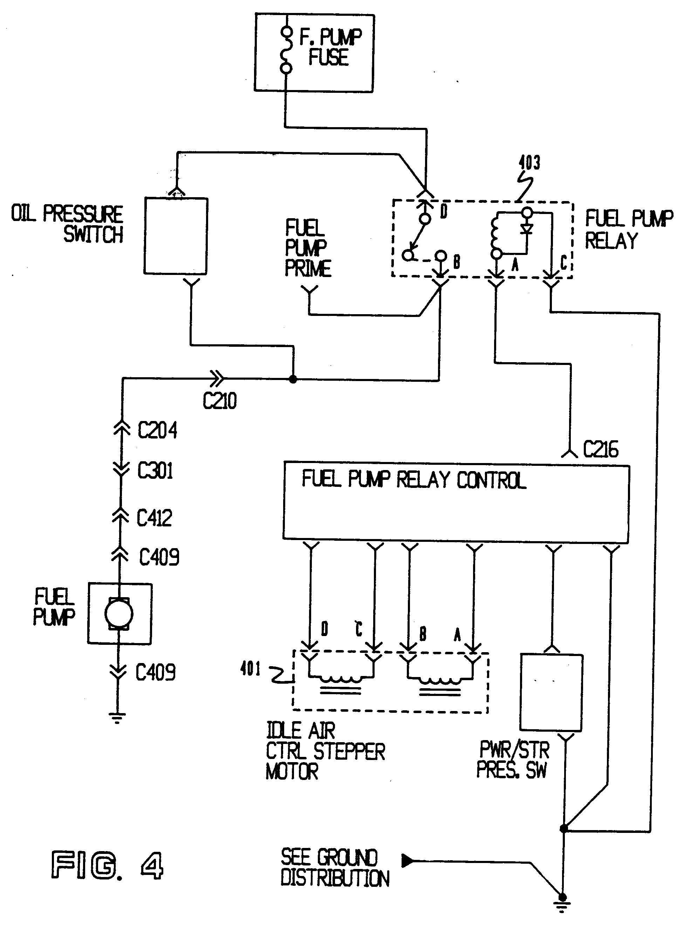

An example of a use of the invention is shown in FIG. 3 and FIG. 4. FIG. 3 is a block diagram of the fuel pump circuit for an engine. Details of the blocks are not shown. In order to troubleshoot a malfunctioning circuit, the user may need to know the connections inside the fuel pump relay block 303 and the idle air stepper motor block 301.

The user selects the CADTECH application 103 in FIG. 1 and the DETAILS function in the function table 107. The type selected is stored as DET. The user then selects the shape 303 in FIG. 3. The pattern associated with the block 303 of FIG. 3 may also be associated with the block 301.

The procedure of the flowchart of FIG. 2 then proceeds through the list of extension records pointed to by the pattern record and will place pointers RELAY.CKT and STPMOTR.CRT from the table 111 into the return list 115. There may also be other pointers that fit the criteria but the two mentioned are the relevant ones.

When the return list is displayed, the user selects the two files which overlays the display of FIG. 3 with the internal details of the selected blocks. This is shown in FIG. 4 where the idle air control stepper motor details 401 and the fuel pump relay details 403 are overlayed on the original display.

The hierarchy of entities in the above description could start at views which include patterns. The patterns include shapes which are made up of lines. Lines in turn can be defined by points. The entities containing the extension records was described as the patterns. It would be possible, however, to include extension records at any entity level or at more than one, depending on the application. The use of extension records not only prevents the casual user from erroneously changing the extension data but also permits the sharing of a common record among more than one entity as well as several levels in the hierarchy but stored only once.

While the invention has been particularly shown and described with reference to a preferred embodiment thereof, it will be understood by those skilled in the art that various changes and modifications in form and details may be made therein without departing from the spirit and scope of the invention according to the following claims.

## Claims

1. A method of employing secondary records to extend graphic information comprising the steps of:
   storing first records specifying graphic entities;
   storing second records containing extended information related to graphic entities;
   displaying graphic entities specified by said first records;
   specifying criteria for identifying classes of said second records;
   selecting a displayed graphic entity; and accessing ones of said second records according to said criteria and a selected graphic entity.

2. The method claimed in claim 1 including after, said displaying step, the step of:
   activating an application supersuming a plurality of functions encompassed by said second records; and wherein said specifying step is replaced by the step of:
   choosing from among said supersumed functions to form, with said activated application, a criteria for denoting ones of second records.

3. The method as claimed in claim 2 wherein said first record includes a pointer to said second records.

4. The method claimed in claim 3 wherein the step of storing first records is replaced by the step of:
   storing first records specifying graphic entities in hierarchical fashion; and wherein the graphic entity including said pointer is at only one hierarchical level.

5. The method claimed in claim 3 wherein the graphic entity including said pointer is at more than one hierarchical level.

6. The combination comprising:
   graphics means for displaying images from stored files specifying displayable entities;
   application means for enabling selection of functions related to displayed entities;
   means in said graphic means for selecting an application means;
   means responsive to selection of a function related to displayed entities for enabling selection of a displayed entity;
   means for associating a selected displayed entity with a corresponding stored file;
   pointer means in said stored files for accessing extension records; and
   means responsive to said pointer means and a selected function for supplying related extension records.

101

CAD
PROGRAM

USER SELECTS
APPLICATION VIA ID

103

CADTECH
PROGRAM
MENU

USER SELECTS
FUNCTION

SHAPE
REFERENCES
PATTERN

SHAPE

105

SHAPE

PATTERN
RECORD

SHAPE

109

USER
SELECTS
SHAPE

| FUNCTION | TYPE |
|---|---|
| LOOKS LIKE | (LL) |
| TEXT PAGES | |
| NOTES | (NOT) |
| WHEREIS | (WI) |
| HOW TO DO IT | (HTD) |
| DETAILS | (DET) |

107

FUNCTION TABLE

PATTERN RECORD
INCLUDES EXTENSION
POINTER

| ID | TYPE | POINTER |
|---|---|---|
| CADTECH | LL | LLRELAY.TIF |
| CADTECH | WI | WRELAY.TIF |
| CADTECH | NOT | RELAY.NOT |
| ANOTHER | ? | |
| CADTECH | HTD | TEXT.FYL |
| CADTECH | DET | RELAY.CKT |
| CADTECH | DET | STPMTR.CKT |

111

EXTENSION RECORDS

RECORDS

RETURN LIST

115

POINTER

TEXT FILE

OVERLAY DWG

ETC.

FIG.1

RETURN LIST
TO APPLICATION
FUNCTION

# FIG.2

ENTER — 201

SELECT APPLICATION
SELECT FUNCTION
SELECT ENTITY — 203

EXTENSION
POINTERS? — 205

NO → RETURN ERROR CODE TO FUNCTION — 207

YES

GET NEXT
EXTENSION
RECORD — 209

DOES
EXTENSION ID
EQUAL
APPLICATION
ID? — 211

NO → ANY
MORE EXTENSION
RECORDS? — 213

YES

YES

PROPER
RECORD
TYPE? — 215

NO →

NO

IS
THE LIST
EMPTY? — 217

NO →

YES

READ DATA FROM
THE RECORD TO
THE RETURN LIST — 219

RETURN ERROR
CODE TO FUNCTION — 221

RETURN LIST
TO FUNCTION — 223

F. PUMP
FUSE

OIL PRESSURE
SWITCH

FUEL
PUMP
PRIME

303

FUEL PUMP
RELAY

C210

C204

C301

C412

C409

FUEL
PUMP

C409

C216

FUEL PUMP RELAY CONTROL

301

IDLE AIR
CTRL STEPPER
MOTOR

PWR/STR
PRES. SW

FIG.3

SEE GROUND
DISTRIBUTION

FIG. 4